# EUROPÄISCHE PATENTSCHRIFT

(11) **EP 1 407 981 B1**
(45) Veröffentlichungstag und Bekanntmachung des Hinweises auf die Patenterteilung: **28.07.2010**
(21) Anmeldenummer: 03023111.2
(22) Anmeldetag: 10.10.2003
(51) Int. Cl.: B65D 88/12, B65D 90/02, B60P 3/22, B65D 88/74, B65D 90/50

(54) **Doppelwandiger Tankcontainer**
Double walled tankcontainer
Conteneur-citerne à double paroi

(30) Priorität: 11.10.2002 DE 20215657 U
(43) Veröffentlichungstag der Anmeldung: 14.04.2004
(73) Patentinhaber: WEW Westerwälder Eisenwerk GmbH, 57586 Weitefeld (DE)
(72) Erfinder: Schmidt, Thomas, 57520 Niederdreisbach (DE); Pfau, Dieter, 57578 Elkenroth (DE); Gerhard, Till, 80687 München (DE)
(74) Vertreter: von Samson-Himmelstjerna, Friedrich

(56) Entgegenhaltungen:
- DE-A1- 2 541 375
- DE-U- 1 947 978
- FR-A- 2 288 681
- FR-A- 2 291 923
- GB-A- 2 013 624
- US-A- 2 189 945
- US-A- 3 143 108
- US-A- 4 936 705

## Beschreibung

Für bestimmte Anwendungen sind doppelwandige Tankcontainer erforderlich. Dabei wird ein Innenbehälter mehr oder weniger vollständig von einem Außenbehälter umgeben. Solche Ausführungen sind notwendig, wenn eine besonders hohe Lecksicherheit gegeben sein muß, wenn der Innentank beispielsweise wegen einer spröden Innenbeschichtung besonders gegen äußere Stoßwirkungen geschützt werden soll oder vollständig von einem Temperiermedium umspült werden soll. In vielen Fällen soll die Leckagesicherheit dadurch weiter erhöht werden, daß der Zwischenraum zwischen Innen- und Außentank vollständig von einer ungefährlichen Prüfflüssigkeit umspült wird, die sowohl bei einer Leckage des Innentanks als auch des Außentanks eine Leckanzeige auslöst.

Vorteilhafterweise sollen die Außenbehälter solcher Tankcontainer in bewährte und standardisierte Rahmenkonstruktionen einbaubar sein, die auch für einwandige Behälter üblich sind. Im Tankcontainerbereich haben sich Ringsattelungen bewährt, wie sie in der DE 32 12 696 C2 beschrieben sind, bei denen der Tank über seine gewölbten Endbögen mit Stirnrahmen verbunden ist. Diese Konstruktion erlaubt die vollständige Übertragung der beim Umschlag und Transport der Tankcontainer entstehenden Kräfte zwischen Böden und Stirnrahmen. Weitere Anbindungen zwischen Tank und Rahmen sind in der Regel nicht erforderlich.

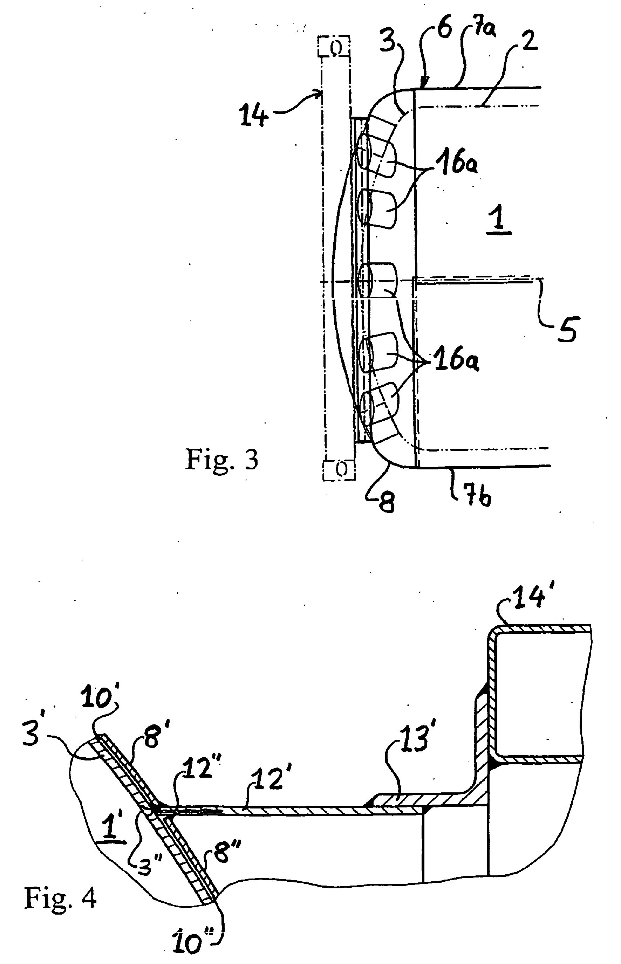

Eine bekannte Ausführungsform einer Stirnringsattelung bei einem doppelwandigen Container zeigt Fig. 4. Dabei ragt ein Stirnring (12') durch den Außenboden (8', 8'') hindurch und ist mit dem Innenboden (3') verschweißt. Dazu muß der Außenboden aufgetrennt werden und ein Stück (8') um den Innenboden (3') und den Stirnring (12') herum wieder zusammengefügt, und ein Außenbodenstück (8'') in den Ring (12') eingesetzt werden. Dieses Verfahren ist fertigungstechnisch unbefriedigend und für Innenbehälter mit einer spröden Innenbeschichtung ungeeignet, da die Transport- und Umschlagskräfte direkt in die die Beschichtung tragende Tankhaut eingeleitet werden. Um dies zu kompensieren, müßte der gesamte Innenbehälter oder aber mindestens seine Endböden mit erhöhter Wandstärke ausgeführt werden. Das Tankgewicht wäre wesentlich erhöht.

Auch eine vollständige Lecksicherung ist auf diese Weise nicht erreichbar bzw. mit erhöhtem Fertigungsaufwand verbunden. Der Stirnring (12') muß im Verbindungsbereich mit dem Innenboden unterbrochen werden, damit der innerhalb des Stirnrings liegende Hohlraum (10') mit dem außerhalb des Stirnrings liegenden Hohlraum (10'') kommunizieren und vollständig von einer Leckanzeigeflüssigkeit durchspült werden kann. Zusätzlich besteht die Gefahr, daß eine Leckage (3''), die im Bereich der Schweißnaht zwischen Stirnring (12') und Innenboden (3') entsteht, nicht angezeigt wird, da sie sich durch möglicherweise vorhandene Blechdoppelungen (12'') im Stirnring durch den Außenmantel (8', 8'') hindurch nach außen fortsetzt, ohne daß die Leckanzeige anspricht.

Aus der FR-A-2 291 923 ist ein Tankcontainer gemäss dem Oberbegriff des Anspruchs 1 bekannt, bei dem zwischen einem Innenboden und einem Außenboden eine als Abstandhalter fungierende Zwischenschicht angeordnet ist. Diese füllt den Hohlraum zwischen Innen- und Außenboden vollständig aus.

Davon ausgehend besteht die Aufgabe der vorliegenden Erfindung darin, einen Innentank in definierter Lage so in einer Außenhülle zu fixieren, daß im Betrieb auftretende Belastungen und Kräfte zwischen Innentank und Rahmenwerk übertragen werden und Maßnahmen zur Leckagesicherung mit geringem Fertigungsaufwand zu realisieren sind, und leichte Innenbehälter mit spröden Innenbeschichtungen für Tankcontainer verfügbar gemacht werden.

Die Lösung der Aufgabe besteht in einem Tankcontainer nach Anspruch 1. Dabei wird der Innenbehälter in seiner Längsrichtung in einem Außenbehälter fixiert, während der Außenbehälter in herkömmlicher Weise mittels einer Stirnringsattelung mit Stirnrahmen verbunden werden kann. Da die gewölbten Innen- und Außenböden mit Fertigungstoleranzen hergestellt werden, ist eine definierte Lagerung des Innenbehälters im Außenbehälter ohne einen Ausgleich dieser Fertigungstoleranzen nicht möglich. Diese Aufgabe wird ebenfalls von dem Abstandshalter gelöst.

Dabei nimmt die konzentrisch zur Tankachse verlaufende, konische Ringanordnung neben den Kräften, die in Richtung der Tankachse verlaufen, auch Quer- und Vertikalkräfte auf.

Die Weiterbildung nach Anspruch 2 erleichtert die Montage des Außentanks um den Innentank herum.

Die Ansprüche 3 und 4 betreffen besonders vorteilhafte Ausführungen und Anordnungen des oder der Abstandshalter bei ringgesattelten Tankcontainern. So erlaubt die Herstellung des Abstandshalters aus mehreren Distanzstücken einen sehr exakten Toleranzausgleich zwischen Innen- und Außenboden. Kräfte, die in Richtung der Tankachse verlaufen, sowie Quer- und Vertikalkräfte werden bei der Ausführung gemäß Anspruch 4 direkt zwischen Innenboden und dem am Außenboden angebrachten Stirnring übertragen.

Anspruch 5 betrifft eine Weiterbildung, bei der der Innentank nicht vollständig vom Außentank umgeben sein muß. Dies ist der Fall, wenn der Außentank als Leckagesicherung dient und damit nur bis zur maximalen Füllhöhe des Innentanks reichen muß.

Anspruch 6 betrifft einen Tankcontainer, bei dem die Außenhülle die Innenhülle vollständig umgibt, wobei die Außenhülle von an der Innenhülle ansetzenden Anschlüssen durchdrungen sein kann. Die Ausführung nach Anspruch 7 betrifft die Nutzung des Hohlraums zur Aufnahme einer Leckanzeigeflüssigkeit oder zur Aufnahme eines Heiz- bzw. Kühlmediums, mit dem der Zwischenraum durchspült werden kann.

Die Ausführungen nach Anspruch 8 und 9 betreffen vor allem solche Tankcontainer, bei denen der Innenbehälter beschichtet ist. Hier wird der Innenbehälter über stoßabsorbierende Abstandhalter im Außenbehälter fixiert. Insbesondere PUR/PIR-Hartschäume erlauben eine besonders schonende Lasteinleitung in den Innenbehälter. Das Ausschäumen der Zwischenräume zwischen Innen- und Außenbehälter, nachdem der Außenbehälter vollständig geschlossen ist, verbessert diese Wirkung und erlaubt besonders dünnwandige, leichte und gleichzeitig beschichtete Innenbehälter. Die Ausführung nach Anspruch 10 erlaubt es, bei geeignet er Wahl der Abstandhalter, eine Heizvorrichtung zwischen Innenund Außenhülle anzubringen, die entweder den Innentank direkt beheizt oder das zwischen Innen- und Außenhülle befindliche Temperiermedium.

Bevorzugte Ausführungsbeispiele werden nachstehend anhand der Zeichnungen näher erläutert. Darin zeigen:
- Figur 1: eine Teilseitenansicht eines erfindungsgemäßen Tankcontainers, bei dem der Stirnrahmen schematisch dargestellt ist,
- Figur 2: ein Detail einer erfindungsgemäßen Stirnringsattelung,
- Figur 3: eine Seitenansicht eines Tankcontainerendes mit einem beschichteten Innentank und stoßabsorbierenden Abstandhaltern,
- Figur 4: ein Detail einer herkömmlichen Stirnringsattelung eines doppelwandigen Tankcontainers.

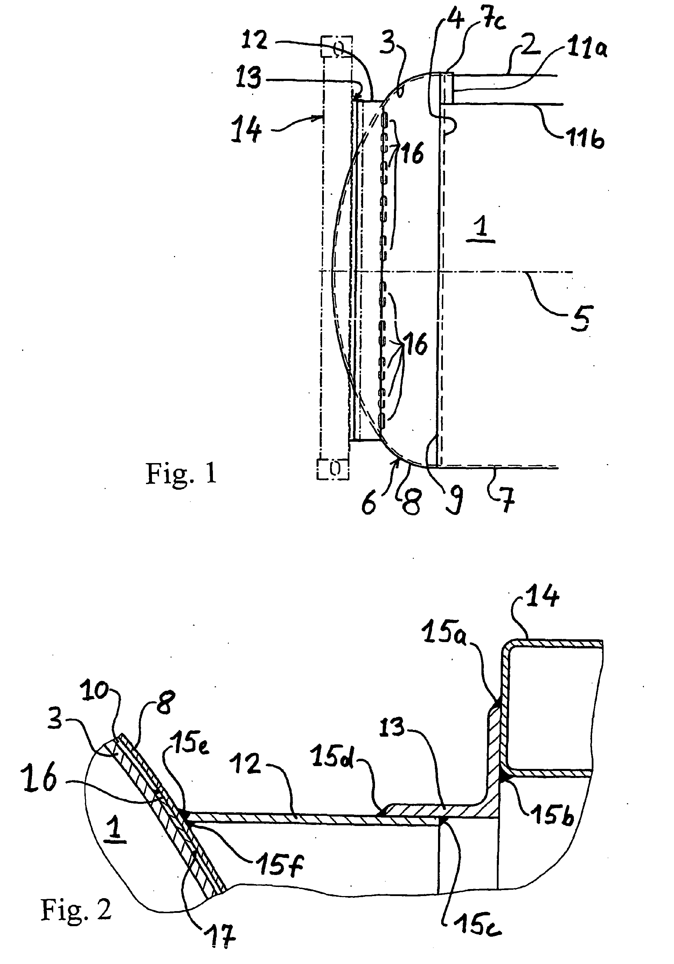

Das in Figur 1 gezeigte Ende eines erfindungsgemäßen Containers zeigt einen doppelwandigen Tank **1**, dessen Innentank aus einem zylindrischen mittleren Tankabschnitt **2** und einem Innenboden **3** besteht, die über die Schweißnaht **4** miteinander verbunden sind. Sowohl Tankabschnitt **2** als auch Innenboden **3** verlaufen konzentrisch zur Tankachse **5**. Weiterhin weist der doppelwandige Tank **1** eine Außenhülle **6** auf, die einen zylindrischen Abschnitt **7** und einen Außenboden 8 umfaßt. Beide Bauteile **7**, **8** verlaufen ebenfalls konzentrisch zur Tankachse **5** und sind über die Schweißnaht **9** miteinander verbunden.

Der dargestellte zylindrische Abschnitt **7** umschließt den Tankabschnitt **2** nur teilweise, so daß dessen Scheitelbereich frei liegt. Diese Ausführungsart ist vorteilhaft, wenn der innere Behälter **2**, **3** nicht komplett umschlossen werden braucht, sondern nur bis zu seiner maximalen Füllhöhe. Der zwischen Innentank **2, 3** und Außentank **7, 8** vorhandene Zwischenraum 10 ist über Schweißnähte **11a, 11b** abgeschlossen.

Der Außenboden **8** ist über eine den zylindrischen Stirnring **12** und den aus einem Winkelprofil hergestellten Sattelring **13** mit dem einen Stirnrahmen **14** aufweisenden Rahmenwerk (nicht dargestellt) verbunden. Dabei sind Stirnrahmen **14,** Sattelring **13,** Stirnring **12** und Außenboden **8** über die Schweißnähte **15a bis 15f** miteinander verbunden.

Der Zwischenraum **10** zwischen Außenboden **8** und Innenboden **3** wird über Distanzstücke **16** gebildet, die konzentrisch zur Tankachse der Außenfläche des Innenbodens **3** und der Innenfläche des Außenbodens **8** folgend in einer konischen Ringanordnung angebracht sind. Sie verlaufen im Bereich der Schweißnähte **15e** und f, so daß über den Stirnring **12** übertragene Lasten durch den Außenboden über die Distanzstücke **16** auf den Innenboden **3** übertragen werden. Die konische Anordnung erlaubt dabei die Obertragung von Kräften in Tankachsenrichtung und quer dazu. Im Ausführungsbeispiel sind die Distanzstücke **16** mit Punktschweißungen **17** am Innenboden **3** fixiert. Eine Befestigung an der Innenfläche des Außenbodens **8** ist ebenso geeignet.

Die Dicke der Distanzstücke **16** bestimmt die Größe des Hohlraums **10** und gleicht gegebenenfalls Fertigungstoleranzen der Innen- und Außenböden **3**, **8** so aus, daß der Innentank **2**, **3** zwischen den Außenböden eingespannt ist.

Im Betrieb dient der Hohlraum **10** der Lecküberwachung. Dabei wird der Hohlraum **10** vollständig mit einer harmlosen Kontrollflüssigkeit gefüllt und ist kommunizierend mit einem nicht dargestellten Ausgleichsbehälter verbunden, der oberhalb des Tankscheitels angeordnet ist. Der nicht gezeigte Anschluß im Tankscheitel ist im Schalensegment **7c** vorgesehen. Der Füllspiegel des Ausgleichsbehälters kann über ein Sichtfenster, ein Schauglas oder einen zusätzlichen Füllstandsanzeiger überwacht werden. Im Falle einer Leckage des Innentanks **2, 3** tritt die Kontrollflüssigkeit ins Innere des Innentanks ein, und der Flüssigkeitspegel im Kontrollbehälter sinkt. Diese Füllstandsänderung wird entweder bei regelmäßigen Kontrollen festgestellt oder löst ein optisches und/oder akustisches Signal aus.

Die Lecküberwachung kann ebenfalls erfolgen, indem der Zwischenraum **10** weitgehend evakuiert wird. Zur Überwachung wird dabei der Druck in diesem Hohlraum ständig überwacht, wobei ein Druckanstieg auf einem nicht dargestellten Druckanzeigegerät erkennbar ist bzw. ein optisches und/oder akustisches Signal auslöst. Um überall zwischen Innentank **2, 3** und Außentank **7, 8** einen kommunizierenden Zwischenraum **10** zu gewährleisten, so daß jede Außen- oder Innenleckage zu einem detektierbaren Druckabfall führt, wird im Zwischenraum **10** eine geeignete Zwischenlage angeordnet, die auch bei evakuiertem Zwischenraum **10** verhindert, daß der Außentank **7, 8** durch den äußeren Überdruck am Innentank **2, 3** anliegt und so möglicherweise Hohlräume gebildet werden, die nicht miteinander kommunizieren und damit von der Lacküberwachung nicht erfaßt werden. Als Zwischenlage sind z.B. alle gitter- oder netzartigen Strukturen geeignet, die zum einen einen offenen Zwischenraum **10** ermöglichen und zum anderen eine hinreichende Stützwirkung entfalten, die den Außentank **7, 8** vom Innentank **2, 3** fern hält. Es gibt auch Ausführungen bei denen ein solches Stützgitter nur im zylindrischen Bereich erforderlich ist, da die gewölbten Außenböden **8** eine höhere Formstabilität gegenüber Druckbelastungen aufweisen, die an ihren konvexen Seiten angreifen.

Der Hohlraum **10** kann ebenfalls dazu benutzt werden, daß darin ein flüssiges oder gasförmiges Temperiermedium zirkuliert, dessen Temperatur über ein angeschlossenes ebenfalls nicht dargestelltes Aggregat kontrolliert wird. Figur 3 zeigt eine Ausführung mit sehr dicken Distanzstücken **16a,** die einen sehr großen Hohlraum **10** erzeugen. Die Distanzstücke **16a** bestehen dabei aus einem stoßabsorbierenden Material (PUR/PIR Hartschäume, Elastomere, Kunststoffe, etc.) und stellen eine energieabsorbierende, dämpfende und elastische Kraftkopplung zwischen Innentank **2, 3** und Außenhülle **6** dar. Bei der gezeigten Ausführung umgibt der zylindrische Abschnitt **7** der Außenhülle **6** den Innentank **2, 3** vollständig und besteht aus den teilzylindrischen Schalensegmenten **7a** und **7b**, die einander und den Außenboden **8** überlappend verschweißt sind. Diese Ausführung eignet sich besonders für Innentanks **2, 3**, die mit einer nicht dargestellten spröden Innenbeschichtung versehen sind, die für sehr aggressive Ladegüter benötigt wird. Durch die elastisch schwimmende Lagerung des Innentanks **2, 3** in der Außenhülle **7a, 7b, 8** werden Belastungen vermieden, die zu Rissen in der Beschichtung führen können. Der Hohlraum **10** kann zusätzlich mit sog. PUR/PIR-Hartschäumen ausgegossen werden oder mit anderen geeigneten Stoffen ausgefüllt werden. Die Schutzwirkung für den Innentank **2, 3** wird dadurch erhöht. Gleichzeitig entsteht eine erhebliche thermische Isolierwirkung, die insbesondere dann genutzt werden kann, wenn temperierte Ladegüter transportiert oder gelagert werden sollen.

Eine nicht dargestellte Gestaltung zu diesem Zweck umfaßt eine Temperiereinrichtung, die im Hohlraum **10** zwischen dem Innentank **2, 3** und Außenhülle **6** angebracht ist, und beispielsweise aus am Innentank angeschweißten Halbrohren, Widerstandsheizelementen oder anderen Einrichtungen zur Temperaturführung bestehen können. Weitere Varianten der vorgestellten Erfindung können darin bestehen, daß anstatt einzelner Distanzstücke **16** ein einziger Abstandhalter als konischer Ring oder als Kalottenscheibe zwischen Innenboden **3** und Außenboden **8** eingesetzt wird. Zusätzliche Distanzstücke oder Abstandhalter können auch im zylindrischen Abschnitt zwischen Innentank **2**, **3** und Außenhülle **6** eingesetzt werden, um insbesondere bei langen Behältern Kräfte quer zur Tankachse **5** besser zwischen Innentank **2**, **3** und Außenhülle **6** zu übertragen.

Bei der Ausführung mit einem sehr großen Hohlraum **10** können die stoßabsorbierenden Distanzstücke **16a** auch als fluidgefüllte Kisten oder Schläuche ausgeführt sein. Bei entsprechender Gestaltung der Distanzstücke **16a** und Füllung des Hohlraums **10** kann der Innenbehälter **2, 3** so schonend gelagert werden, daß er vollständig aus einem spröden Werkstoff wie Glas bestehen kann.

### Bezugszeichenliste:

### Fig. 1 - 3:

- **1**: doppelwandiger Tank
- **2**: zylindrischer Tankabschnitt
- **3**: Innenboden
- **4**: Schweißnaht
- **5**: Tankachse
- **6**: Außenhülle
- **7**: zylindrischer Außenhüllenabschnitt
- **7a, 7b, 7c**: Schalensegmente
- **8**: Außenboden
- **9**: Schweißnaht
- **10**: Hohlraum
- **11a, 11b**: Schweißnähte
- **12**: Stirnring
- **13**: Sattelring
- **14**: Stirnrahmen
- **15a-15f**: Stirnsattel-Schweißnähte
- **16**: Distanzstück
- **16a**: dämpfendes Distanzstück

### Fig. 4:

- **1'**: doppelwandiger Tank
- **3'**: Innenboden
- **3''**: Leckage
- **8'**: Außenboden (äußerer Bereich)
- **8''**: Innenboden (innerer Bereich)
- **10'**: Hohlraum (äußerer Bereich)
- **10''**: Hohlraum (innerer Bereich)
- **12'**: Stirnring
- **12''**: Blechdoppelung
- **13'**: Sattelring
- **14'**: Stirnrahmen

## Patentansprüche

1. Tankcontainer mit einem doppelwandigen Tank (1), der an seinen beiden Enden jeweils mit einem gewölbten Innen- und Außenboden (2, 8) verschlossen ist, wobei die äußere Tankhülle (6) mit einem Rahmenwerk (14) verbunden ist, und
an einem Ende zwischen Außenboden (8) und dem Innenboden (3) ein Abstandhalter angeordnet ist, **dadurch gekennzeichnet, daß** der Abstandhalter als eine weitgehend konzentrisch zur Tankachse verlaufende, konische Ringanordnung ausgebildet ist, die jeweils der Außenfläche des Innenbodens und der Innenfläche des Außenbodens folgt.

2. Tankcontainer nach Anspruch 1, wobei der Abstandhalter entweder am Innen- oder am Außenboden (3, 8) befestigt, insbesondere verschweißt oder verklebt ist.

3. Tankcontainer nach Anspruch 1 oder 2, wobei der Abstandhalter aus mehreren Distanzstücken (16, 16a) besteht.

4. Tankcontainer nach einem der vorhergehenden Ansprüche, wobei der Abstandhalter im Bereich eines zu einer Stirnsattelung (12, 13) gehörenden, mit dem Außenboden (8) verbundenen Stirnrings (12) angeordnet ist.

5. Tankcontainer nach einem der vorhergehenden Ansprüche, wobei der zylindrische Abschnitt der Außenhülle (7) zwischen den Außenböden (8) den Innentank (2, 3) nur teilweise in einem unteren Bereich umgibt.

6. Tankcontainer nach einem der vorhergehenden Ansprüche, wobei die Außenhülle (6) den Innentank (2, 3) vollständig umgibt und nur über Abstandshalter mit dem Innentank (2, 3) gekoppelt ist.

7. Tankcontainer nach einem der vorhergehenden Ansprüche, wobei der durch Abstandhalter oder Distanzstücke (16, 16a) definierte Hohlraum (10) zwischen Außenhülle (6) und Innentank (2, 3) mit einer Kontrollflüssigkeit oder einem Temperiermedium gefüllt ist.

8. Tankcontainer nach einem der Ansprüche 1 bis 6, wobei Abstandhalter oder Distanzstücke (16, 16a) aus einem ersten stoßabsorbierenden Material bestehen und der Hohlraum (10) zwischen Innehtank (2, 3) und Außenhülle (6) mit einem zweiten Material ausgefällt ist, wobei das erste Material insbesondere PUR/PIR Hartschäurrie, Elastomere und Kunststoffe, und das zweite Material PUR/PIR Ortsschäume umfaßt.

9. Tankcontainer nach einem der vorhergehenden Ansprüche, wobei die Innenseite des Innentanks (2, 3) mit einer Beschichtung, insbesondere mit einer Phenolharz- oder Glasemailbeschichtung versehen ist, oder der Innentank (2, 3) aus einem spröden Werkstoff, insbesondere Glas besteht.

10. Tankcontainer nach einem der Ansprüche 1 bis 6, 8 und 9, wobei der Zwischenraum zwischen der Innen- und Außenhülle eine Temperiervorrichtung enthält.

## Claims

1. Tank container with a double-walled tank (1) connected on both ends by a vaulted interior and exterior bottom (2, 8), whereby the outer tank enclosure (6) is connected with a frame (14), and
a spacer placed on one end between the exterior bottom (8) and the interior bottom (3),
**characterized in that**
the spacer is placed in a conical ring arrangement largely concentric with respect to the tank axle and following the exterior surface of the interior bottom plate and the interior surface of the exterior bottom plate, respectively.

2. Tank container according to claim 1, whereby the spacer is attached, in particular welded or glued, to either the interior or the exterior bottom plate (3, 8).

3. Tank container according to claim 1 or 2, whereby the spacer is composed of several spacer pieces (16, 16a).

4. Tank container according to anyone of the preceeding claims, whereby the spacer is located in the range of a front ring (12), which is spart of a head mounting (12, 13) and connected with the exterior bottom plate (8).

5. Tank container according to anyone of the preceeding claims, whereby the cylindrical section of the outer enclosure (7) between the exterior bottoms (8) encompasses the inner tank (2, 3) only in part in a lower area.

6. Tank container according to anyone of the preceeding claims, whereby the outer enclosure (6) completely encompasses the inner tank (2, 3) and is attached to the inner tank (2, 3) only with spacers.

7. Tank container according to anyone of the preceeding claims, whereby the hollow space (10), which is defined by the spacers or spacer pieces (16, 16a), between the outer enclosure (6) and the inner tank (2, 3) is filled with a test liquid or a temperature equalization medium.

8. Tank container according to claims 1 to 6, whereby spacers or spacer pieces (16, 16a) made of a first shock-absorbing material and the hollow space (10) between the inner tank (2, 3) and the outer enclosure (6) are filled with a second material. The first material includes in particular of high-resistance PUR/PIR, elastomers and plastics, and the second material includes of PUR/PIR insitu foams.

9. Tank container according to anyone of the preceeding claims, whereby the interior of the inner tank (2, 3) is equipped with a coat, in particular a phenolic resin or vitreous enamel coat, or the inner tank (2, 3) is made of a brittle material, in particular glass.

10. Tank container according to one of claims 1 to 6, 8 and 9, whereby the clearance between the inner and outer enclosure is equipped with a temperature equalizing devise.

## Revendications

1. Conteneur-citerne, comportant une citerne (1) à double paroi, qui est fermée à ses deux extrémités respectivement par un fond intérieur et un fond extérieur (2, 8) bombés, l'enveloppe extérieure (6) de la citerne étant reliée à une ossature (14), et un écarteur est disposé au niveau d'une extrémité entre le fond extérieur (8) et le fond intérieur (3), **caractérisé en ce que** l'écarteur est réalisé sous la forme d'un système annulaire conique, qui s'étend en grande partie concentriquement à l'axe de la citerne et qui suit respectivement la surface extérieure du fond intérieur et la surface intérieure du fond extérieur.

2. Conteneur-citerne selon la revendication 1, dans lequel l'écarteur est fixé, en particulier soudé ou collé, contre le fond intérieur (3, 8) ou contre le fond extérieur.

3. Conteneur-citerne selon la revendication 1 ou 2, dans lequel l'écarteur est formé par plusieurs pièces intercalaires (16, 16a).

4. Conteneur-citerne selon l'une quelconque des revendications précédentes, dans lequel l'écarteur est disposé dans la zone d'une virole frontale (12), faisant partie d'un ensemble de calage frontal (12, 13) et assemblée au fond extérieur (8).

5. Conteneur-citerne selon l'une quelconque des revendications précédentes, dans lequel la partie cylindrique de l'enveloppe extérieure (7) entre les fonds extérieurs (8) entoure la citerne intérieure (2, 3) seulement partiellement dans une zone inférieure.

6. Conteneur-citerne selon l'une quelconque des revendications précédentes, dans lequel l'enveloppe extérieure (6) entoure totalement la citerne intérieure (2, 3) et est couplée à la citerne intérieure (2, 3) uniquement par l'intermédiaire d'écarteurs.

7. Conteneur-citerne selon l'une quelconque des revendications précédentes, dans lequel la cavité (10) définie par des écarteurs ou pièces intercalaires (16, 16a) entre l'enveloppe extérieure (6) et la citerne intérieure (2, 3) est remplie d'un liquide témoin ou d'un fluide d'équilibrage de température.

8. Conteneur-citerne selon l'une quelconque des revendications 1 à 6, dans lequel les écarteurs ou les pièces intercalaires (16, 16a) sont réalisés dans un premier matériau absorbant les chocs et la cavité (10) entre la citerne intérieure (2, 3) et l'enveloppe extérieure (6) est comblée par un deuxième matériau, le premier matériau comportant en particulier des mousses PUR/PIR dures, des élastomères et des matières plastiques, et le deuxième matériau comportant des mousses PUR/PIR coulées in situ.

9. Conteneur-citerne selon l'une quelconque des revendications précédentes, dans lequel la face intérieure de la citerne intérieure (2, 3) est munie d'un revêtement, en particulier un revêtement de résine phénolique ou un revêtement en émail vitrifié, ou la citerne intérieure (2, 3) est réalisée dans un matériau fragile, en particulier le verre.

10. Conteneur-citerne selon l'une quelconque des revendications 1 à 6, 8 et 9, dans lequel l'espace intermédiaire entre l'enveloppe intérieure et l'enveloppe extérieure contient un dispositif d'équilibrage de température.
